# FASCICULE DE BREVET EUROPEEN

(11) **EP 0 858 923 B1**
(45) Date de publication et mention de la délivrance du brevet: **11.07.2001**
(21) Numéro de dépôt: 98400321.0
(22) Date de dépôt: 11.02.1998
(51) Int. Cl.: B60K 15/05

(54) **Dispositif de fermeture d'un volet d'occultation du bouchon d'obturation de la tubulure de remplissage d'un réservoir de carburant de véhicule automobile**
Schliesseinrichtung einer Verschlussklappe einer Abdeckkappe eines Treibstoffbehälters für ein Kraftfahrzeug
Locking device for a sealing cap of a fuel tank inlet cover for an automotive vehicle

(30) Priorité: 13.02.1997 FR 9701685
(43) Date de publication de la demande: 19.08.1998
(73) Titulaire: AUTOMOBILES PEUGEOT, 75116 Paris (FR); AUTOMOBILES CITROEN, 92200 Neuilly-sur-Seine (FR)
(72) Inventeur: Burguburu, Philippe, 78000 Versailles (FR)
(74) Mandataire: Thinat, Michel

(56) Documents cités:
- EP-A- 0 096 604
- DE-A- 4 126 130
- FR-A- 2 323 553
- FR-A- 2 582 340
- PATENT ABSTRACTS OF JAPAN vol. 008, no. 108 (M-297) [1545] , 19 mai 1984 & JP 59 018022 A (NISSAN JIDOSHA KK), 30 janvier 1984,

## Description

La présente invention concerne un dispositif de fermeture d'un volet d'occultation du bouchon d'obturation de la tubulure de remplissage d'un réservoir de carburant de véhicule automobile.

Elle vise plus particulièrement un dispositif permettant de détecter l'absence du bouchon sur la tubulure de remplissage de ce réservoir.

Les législations actuellement en vigueur dans de nombreux pays industrialisés limitent les émanations d'hydrocarbures émises par les véhicules automobiles.

Des moyens particuliers sont utilisés pour absorber les vapeurs émises par le carburant du réservoir d'un véhicule et les brûler dans le moteur de celui-ci. Cependant, ces moyens sont inutiles lorsque l'automobiliste omet de remettre en place le bouchon d'obturation de la tubulure de remplissage du réservoir de carburant.

Pour remédier à cet oubli, on connaît une solution utilisant un contact électrique lié à la présence du bouchon sur la tubulure de remplissage de façon à commander un moyen de signalisation lumineuse situé au tableau de bord du véhicule et indiquant que le bouchon n'a pas été remis en place sur la tubulure de remplissage.

Cependant, cette solution connue nécessite l'utilisation d'un capteur pour détecter la présence du bouchon, une ligne de transmission de l'information de sortie de ce capteur et un moyen de signalisation lumineux relié à cette ligne. De plus, le montage du moyen de signalisation lumineuse au tableau de bord du véhicule n'est pas toujours aisé compte tenu des problèmes d'emplacement et de style que cela peut poser au niveau du tableau de bord.

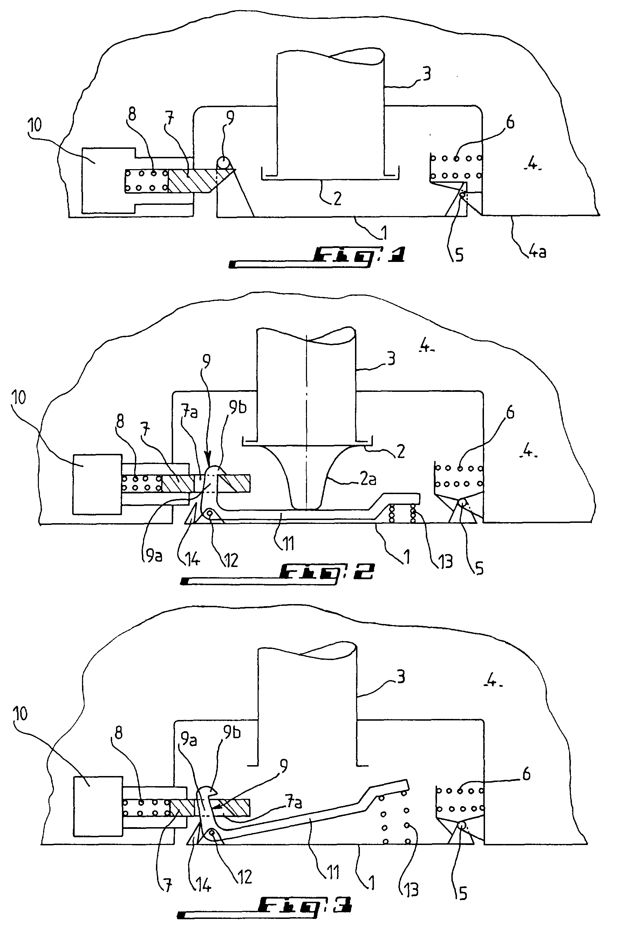

La figure 1 représente schématiquement une solution connue, à laquelle s'applique en particulier l'invention, d'un dispositif de fermeture d'un volet 1 d'occultation du bouchon 2 d'obturation de la tubulure 3 de remplissage d'un réservoir de carburant (non représenté) de véhicule automobile.

Selon ce dispositif connu, le volet 1 est monté pivotant à la caisse 4 du véhicule autour d'un axe vertical d'articulation 5 entre une position fermée d'occultation du bouchon 2 représentée en figure 1 et une position d'ouverture (non représentée) sensiblement perpendiculaire à la surface de paroi externe environnante 4a de la caisse 4.

Un ressort hélicoïdal 6 logé dans la cavité de logement du bouchon 2 et interposé entre une partie de paroi latérale de cette cavité et une partie droite solidaire du volet 1, assure l'ouverture du volet 1 lorsque le mécanisme de verrouillage de ce volet est déverrouillé et le maintien en position d'ouverture de celui-ci.

Ce mécanisme comprend un pêne 7 maintenu à la position représentée en figure 1 par un ressort hélicoïdal 8 et coopérant avec une partie formant gâche 9 solidaire du dos du volet 1 de manière à verrouiller le volet 1 comme représenté sur cette figure. Un dispositif de commande manuelle ou électrique 10, connu en soi, permet le déplacement du pêne 7 à l'encontre de la force de rappel du ressort 8 à une position de déverrouillage de la partie formant gâche 9 et donc l'ouverture du volet 1 qui est amené en position d'ouverture par le ressort de rappel 6.

Lorsque le conducteur du véhicule a rempli le réservoir de carburant de son véhicule, il remet en place le bouchon 2 sur la tubulure de remplissage 3 et repousse le volet 1 vers sa position de fermeture de façon que la partie formant gâche 9 agisse sur le pêne 7 pour le repousser à l'encontre de la force de rappel du ressort 8, lequel pêne revient ensuite à sa position de maintien de la partie formant gâche 9 représentée en figure 1.

Selon la configuration du dispositif décrit en référence à la figure 1, le volet 1 peut être fermé sans que le bouchon 2 soit remis en place sur la tubulure de remplissage 3 et donc sans que le conducteur du véhicule ne se rende compte de l'absence de ce bouchon.

L'invention propose un dispositif permettant de résoudre le problème d'absence d'un bouchon d'obturation d'une tubulure de remplissage d'un réservoir de carburant de véhicule automobile.

A cet effet, selon l'invention, le dispositif de fermeture d'un volet d'occultation du bouchon d'obturation de la tubulure de remplissage d'un réservoir de carburant de véhicule automobile, comprenant des moyens de verrouillage déverrouillables du volet en position fermée de celui-ci et constitués par un pêne, logé dans une partie de caisse du véhicule, coopérant avec une partie formant gâche du volet située à l'opposé de l'articulation du volet sur la caisse du véhicule, est caractérisé en ce qu'il comprend un levier de commande de la partie formant gâche monté pivotant sur le dos du volet et pouvant basculer, lors de la fermeture du volet, en venant en contact avec le bouchon d'obturation pour amener la partie formant gâche en position de verrouillage avec le pêne à laquelle le volet est maintenu fermé.

Le levier de commande est basculé par poussée par le bouchon d'obturation en position de verrouillage de la partie formant gâche à l'encontre de la force de rappel d'un moyen élastique, tel qu'un ressort hélicoïdal, interposé entre une extrémité du levier opposée à son axe de pivotement et le dos du volet, lequel moyen élastique rappelle le levier de commande à une position de déverrouillage de la partie formant gâche lorsque le pêne est déverrouillé de celle-ci et maintient le levier à cette position de déverrouillage lors de la fermeture du volet et en l'absence du bouchon d'obturation.

Le dispositif comprend de plus un moyen élastique, tel qu'un ressort hélicoïdal, agencé pour permettre l'ouverture du volet lors du déverrouillage de la partie formant gâche du pêne et maintenir ou rappeler le volet en position d'ouverture tant que la partie formant gâche est déverrouillée du pêne.

Le bouchon d'obturation comprend une excroissance, de préférence en un matériau souple, permettant de pousser le levier de commande, lors de la fermeture du volet, à une position de plaquage contre le dos du volet.

Avantageusement, la partie formant gâche et le levier de commande sont réalisés en une seule pièce et la partie formant gâche comprend une tige rigide s'étendant de l'extrémité du levier opposée au moyen de rappel du levier, perpendiculairement à celui-ci, et se terminant par un élément d'accrochage en forme de crochet s'engageant dans une ouverture du pêne pour s'y accrocher lorsque le levier de commande occupe la position de fermeture du volet en présence du bouchon et étant désengagé du pêne lorsque le levier est maintenu par le moyen élastique correspondant en position basculée d'ouverture du volet.

L'axe de pivotement du levier de commande sur le dos du volet est situé au niveau de la liaison de la tige de la partie formant gâche à l'extrémité correspondante de ce levier.

Le dispositif comprend également une butée solidaire du dos du volet et limitant le basculement du levier de commande à la position d'ouverture du volet.

Le dispositif comprend enfin un mécanisme de commande, manuelle ou électrique, agissant sur le pêne pour déverrouiller la partie formant gâche.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 représente un dispositif connu de fermeture d'un volet d'occultation du bouchon d'obturation de la tubulure de remplissage d'un réservoir de carburant de véhicule automobile.
La figure 2 représente un dispositif de fermeture d'un tel volet d'occultation conforme à l'invention où le volet est verrouillé en position de fermeture.
La figure 3 représente le dispositif de la figure 2 où le volet d'occultation ne peut être verrouillé en position de fermeture en l'absence du bouchon d'obturation de la tubulure de remplissage.

Les éléments du dispositif de fermeture de l'invention des figures 1 et 2 identiques à ou accomplissant la même fonction que ceux du dispositif de fermeture de la figure 1 portent les mêmes références.

En se reportant aux figures 1 et 2, le dispositif comprend le volet 1 d'occultation du bouchon 2 d'obturation de la tubulure 3 de remplissage d'un réservoir de carburant du véhicule automobile, lequel volet 1 est monté pivotant relativement à la caisse 4 du véhicule autour d'un axe d'articulation 5 sensiblement vertical de façon que le volet puisse occuper une position verrouillée de fermeture représentée en figure 2 pour occulter le bouchon 2 et une position d'ouverture (non représentée) à laquelle le volet 1 est approximativement perpendiculaire à la surface de paroi extérieure adjacente de la caisse 4.

Le volet 1 est rappelé automatiquement à sa position d'ouverture par le ressort hélicoïdal 6 monté dans la cavité de réception du bouchon 2 de façon identique au ressort 6 de la figure 1.

Les moyens de verrouillage du volet 1 à la caisse 4 du véhicule comprennent également un pêne 7 commandé par un dispositif de commande manuelle ou électrique et une partie formant gâche 9 solidaire du dos du volet 1 verrouillée au pêne 7 en position de fermeture du volet 1 et pouvant être déverrouillée de ce pêne par le dispositif de commande 10 pour obtenir l'ouverture du volet 1.

Le dispositif conforme à l'invention comprend un levier 11 de commande de la partie formant gâche 9 et monté pivotant au dos du volet 1 autour d'un axe de pivotement 12 sensiblement parallèle à l'axe d'articulation 5 du volet 1 à l'opposé de celui-ci.

Le levier de commande 11 et la partie formant gâche 9 sont de préférence réalisés en une seule pièce et la partie formant gâche 9 comprend un élément en forme de tige rigide 9a solidaire de l'extrémité du levier 11 de façon sensiblement perpendiculaire à celui-ci et un élément d'accrochage 9b en forme de crochet terminant la tige 9a.

L'axe 12 de pivotement du levier 11, solidaire du dos du volet 1, est situé au niveau de la partie de raccordement de la partie formant gâche 9 à l'extrémité correspondante du levier 11.

Lorsque la partie formant gâche 9 est déverrouillée du pêne 7, le levier de commande 11 est basculé dans le sens anti-horaire par un moyen élastique 13, tel qu'un ressort hélicoïdal, interposé entre la partie d'extrémité du levier 11 opposée à la partie formant gâche 9 et le dos du volet 1. L'angle de basculement du levier 11 est limité par une butée 14 solidaire du dos du volet 1 et sur laquelle vient en appui la tige 9a de la partie formant gâche 9.

En position de fermeture du volet 1 représentée en figure 2, la partie formant gâche 9 traverse une ouverture 7a du pêne 7 et l'élément d'accrochage 9b de la partie 9 est en appui sur une face postérieure du pêne 7 de manière à verrouiller le volet 1 en position de fermeture.

Le maintien de la partie formant gâche 9 à sa position de verrouillage du volet 1 est assuré par le bouchon 2 qui comporte une excroissance ou bossage 2a dont le sommet est en appui sur le levier 11 au voisinage de sa partie médiane de manière à plaquer celui-ci contre le dos du volet 1 à l'encontre de la force de rappel du moyen élastique 13, qui est ainsi comprimé, de sorte que la partie formant gâche 9 occupe une position de verrouillage du volet 1 à sa position de fermeture approximativement verticale au volet 1. De préférence, l'excroissance 2a est réalisée en un matériau souple de façon à garantir un bon appui du levier 11 sur le dos du volet 1.

Le fonctionnement du dispositif de l'invention ressort déjà de la description qui en a été faite ci-dessus et va être maintenant expliqué.

Lorsque le conducteur du véhicule a rempli le réservoir de carburant de son véhicule, il remet en place le bouchon 2 sur la tubulure de remplissage 3 et rabat ensuite le volet 1 vers sa position de fermeture à l'encontre de la force de rappel du ressort 6. Lors du rabattement du volet 1, le levier 11 vient en contact avec le sommet de l'excroissance 2a du bouchon 2 de sorte que le levier 11 bascule dans le sens horaire en comprimant le ressort 13 et la partie formant gâche 9, pendant le rabattement du volet 1 et le basculement du levier 11, repousse tout d'abord par la tête de l'élément d'accrochage 9b le pêne 7 vers la gauche par rapport à la figure 2 à l'encontre de la force de rappel du ressort 8 en pénétrant dans l'ouverture 7a de ce pêne et traverse ensuite cette ouverture pour arriver à la position représentée à la figure 2 selon laquelle le pêne 7 occupe la position de retenue ou d'accrochage de l'élément 9b de la partie formant gâche 9. Le volet 1 est alors verrouillé en position fermée. Pour obtenir l'ouverture du volet 1, le dispositif 10 commande le pêne 7 de manière à libérer ou décrocher l'élément 9b de la partie 9 du pêne 7 et le ressort 13 fait alors basculer le levier 11 dans le sens anti-horaire à sa position de déverrouillage du volet 1 en appui contre la butée 14. Le ressort 6 agit alors sur le volet 1 pour le faire pivoter à sa position d'ouverture.

Lorsque le conducteur omet de remettre en place le bouchon 2 sur la tubulure de remplissage 3, en rabattant le volet 1 à sa position de fermeture, le levier 11 est maintenu par le ressort 13 à la position de déverrouillage de la partie formant gâche 9 en appui contre la butée 14 et en continuant le mouvement de rabattement du volet 1, la partie formant gâche 9 passe dans l'ouverture 7a du pêne 7 sans pouvoir s'accrocher par son élément 9b au pêne 7 puisque le bouchon 2 est absent pour faire basculer le levier 11 dans le sens horaire à la position de verrouillage de la partie formant gâche 9. Lorsque le conducteur relâche le volet 11, celui-ci est alors automatiquement ramené par le ressort 6 à sa position d'ouverture. Le conducteur peut alors immédiatement se rendre compte de cette anomalie et constatera l'absence du bouchon 2 qu'il pourra alors remettre en place. Dans l'hypothèse où le conducteur ne s'apercevrait pas immédiatement d'une telle anomalie, il pourra s'en apercevoir ultérieurement en consultant le rétroviseur extérieur du véhicule situé à sa droite.

Le dispositif conforme à l'invention empêche ainsi le verrouillage du volet d'occultation du bouchon d'obturation à la tubulure de remplissage de réservoir de carburant d'un véhicule lorsque ce bouchon n'est pas remis en place sur la tubulure de remplissage, de sorte que le conducteur du véhicule est immédiatement averti de cette anomalie ou, le cas échéant, ultérieurement, en consultant le rétroviseur extérieur à sa droite.

## Revendications

1. Dispositif de fermeture d'un volet (1) d'occultation du bouchon (2) d'obturation de la tubulure de remplissage (3) d'un réservoir de carburant de véhicule automobile, comprenant des moyens de verrouillage déverrouillables du volet (1) en position fermée de celui-ci et constitués par un pêne (7), logé dans une partie de caisse du véhicule, coopérant avec une partie formant gâche (9) du volet (1) située à l'opposé de l'articulation (5) du volet (1) sur la caisse (4) du véhicule, caractérisé en ce qu'il comprend un levier de commande (11) de la partie formant gâche (9) monté pivotant sur le dos du volet (1) et pouvant basculer, lors de la fermeture du volet (1), en venant en contact avec le bouchon d'obturation (2) pour amener la partie formant gâche (9) en position de verrouillage avec le pêne (7) à laquelle le volet (1) est maintenu fermé.

2. Dispositif selon la revendication 1, caractérisé en ce que le levier de commande (11) est basculé par poussée par le bouchon d'obturation (2) en position de verrouillage de la partie formant gâche (9) à l'encontre de la force de rappel d'un moyen élastique (13), tel qu'un ressort hélicoïdal, interposé entre une extrémité du levier (11) opposée à son axe de pivotement (12) et le dos du volet (1), lequel moyen élastique (13) rappelle le levier de commande (11) à une position de déverrouillage de la partie formant gâche (9) lorsque le pêne (7) est déverrouillé de celle-ci et maintient le levier (11) à cette position de déverrouillage lors de la fermeture du volet (1) et en l'absence du bouchon d'obturation (2).

3. Dispositif selon la revendication 1 ou 2, caractérisé en ce qu'il comprend un moyen élastique (6), tel qu'un ressort hélicoïdal, agencé pour permettre l'ouverture du volet (1) lors du déverrouillage de la partie formant gâche (9) du pêne (7) et maintenir ou rappeler le volet (1) en position d'ouverture tant que la partie formant gâche (9) est déverrouillée du pêne (7).

4. Dispositif selon l'une des revendications précédentes, caractérisé en ce que le bouchon d'obturation (2) comprend une excroissance (2a), de préférence en un matériau souple, permettant de pousser le levier de commande (11), lors de la fermeture du volet (1), à une position de plaquage du levier (11) contre le dos du volet (1).

5. Dispositif selon l'une des revendications précédentes, caractérisé en ce que la partie formant gâche (9) et le levier de commande (11) sont réalisés en une seule pièce et la partie formant gâche (9) comprend une tige rigide (9a) s'étendant de l'extrémité du levier (11) opposée au moyen de rappel (13) du levier (11) perpendiculairement à celui-ci et se terminant par un élément d'accrochage (9b) en forme de crochet s'engageant dans une ouverture (7a) du pêne (7) pour s'y accrocher lorsque le levier de commande (11) occupe la position de fermeture du volet (1) en présence du bouchon (2) et étant désengagé du pêne (7) lorsque le levier (11) est maintenu par le moyen élastique correspondant (13) en position basculée d'ouverture du volet (1).

6. Dispositif selon la revendication 5, caractérisé en ce que l'axe de pivotement (12) du levier de commande (11) est situé au niveau de la liaison de la tige (9a) de la partie formant gâche (9) à l'extrémité correspondante du levier (11).

7. Dispositif selon l'une des revendications précédentes, caractérisé en ce qu'il comprend une butée (14) solidaire du dos du volet (1) et limitant le basculement du levier de commande (11) à la position d'ouverture du volet (1).

8. Dispositif selon l'une des revendications précédentes, caractérisé en ce qu'il comprend un mécanisme de commande, manuelle ou électrique, agissant sur le pêne (7) pour déverrouiller la partie formant gâche (9).

## Patentansprüche

1. Verschlußvorrichtung einer Verschlußkappe (1) zum Abdecken des Deckels (2) zum Abdecken der Einfüllröhre (3) eines Kraftstofftanks eines Kraftfahrzeugs, umfassend entriegelbare Verriegelungsmittel der Verschlußklappe (1) in geschlossener Position derselben und gebildet durch einen Riegel (7), der in einem Teil des Wagenkastens untergebracht ist, der mit einem einen Schließhaken (9) bildenden Teil der Verschlußklappe (1) zusammenwirkt, der sich gegenüber der Artikulation (5) der Verschlußklappe (1) auf dem Wagenkasten (4) befindet, dadurch gekennzeichnet, daß sie einen Schalthebel (11) des einen Schließhaken (9) bildenden Teils umfaßt, der schwenkbar auf der Rückseite der Verschlußklappe (1) angebracht ist und beim Schließen der Verschlußklappe (1) schwenken kann und dabei mit dem Deckel zum Abdecken (2) in Kontakt kommt, um den einen Schließhaken (9) bildenden Teil in Verriegelungsposition mit dem Riegel (7) zu bringen, in der die Verschlußklappe (1) fest gehalten wird.

2. Vorrichtung gemäß Anspruch 1, dadurch gekennzeichnet, daß der Schalthebel (11) durch Schieben durch den Deckel zum Abdecken (2) in Verriegelungsposition des einen Schließhaken (9) bildenden Teils gegen die Rückstellkraft eines elastischen Mittels (13) wie zum Beispiel einer zylindrischen Schraubenfeder geschwenkt wird, die zwischen einem äußeren Ende des Hebels (11) gegenüber seiner Schwenkachse (12) und der Rückseite der Verschlußklappe (1) zwischengeschaltet ist, wobei das elastische Mittel (13) den Schalthebel (11) in eine Entriegelungsposition des einen Schließhaken (9) bildenden Teils zurückholt, wenn der Riegel (7) von diesem entriegelt ist und den Hebel (11) bei Verschluß der Verschlußklappe (1) und in Abwesenheit des Deckels zum Abdecken (2) in dieser Entriegelungsposition hält.

3. Vorrichtung gemäß Anspruch 1 oder 2, dadurch gekennzeichnet, daß sie ein elastisches Mittel (6) wie zum Beispiel eine zylindrische Schraubenfeder umfaßt, die angeordnet ist, um die Öffnung der Verschlußklappe (1) bei der Entriegelung des einen Schließhaken (9) bildenden Teil des Riegels (7) zu erlauben und die Verschlußklappe (1) in Öffnungsposition zu halten oder zurückzuholen, solange der einen Schließhaken (9) bildende Teil vom Riegel (7) entriegelt ist.

4. Vorrichtung gemäß einem der vorgenannten Ansprüche, dadurch gekennzeichnet, daß der Deckel zum Abdecken (2) eine Ausbuchtung (2a) umfaßt, bevorzug aus einem elastischen Material, das es erlaubt, den Schalthebel (11) beim Verschluß der Verschlußklappe (1) in eine Andrückposition des Hebels (11) gegen die Rückseite der Verschlußklappe (1) zu schieben.

5. Vorrichtung gemäß einem der vorgenannte Ansprüche, dadurch gekennzeichnet, daß der eine Schließhaken (9) bildende Teil und der Schalthebel (11) aus einem Stück realisiert sind und der einen Schließhaken (9) bildende Teil einen festen Stift (9a) umfaßt, der sich vom äußeren Ende des Hebels (11) gegenüber dem Rückholmittel (13) des Hebels (11) senkrecht zu diesem erstreckt und in einem Festhalteelement (9b) in Hakenform endet, das in eine Öffnung (7a) des Riegels (7) eingreift, um sich dort festzuhaken, wenn der Schalthebel (11) die Verschlußposition der Verschlußklappe (1) in Gegenwart des Deckels (2) einnimmt und vom Riegel (7) losgelöst ist, wenn der Hebel (11) durch das entsprechende elastische Mittel (13) in geschwenkter Öffnungsposition der Verschlußklappe (1) gehalten wird.

6. Vorrichtung gemäß Anspruch 5, dadurch gekennzeichnet, daß die Schwenkachse (12) des Schalthebels (11) sich auf der Höhe der Verbindung des Stiftes (9a) des einen Schließhaken (9) bildenden Teils am entsprechenden äußeren Ende des Hebels (11) befindet.

7. Vorrichtung gemäß einem der vorgenannte Ansprüche, dadurch gekennzeichnet, daß er einen Anschlag (14) umfaßt, der fest mit der Rückseite der Verschlußklappe (1) verbunden ist und das Schwenken des Schalthebels (11) in der Öffnungsposition der Verschlußklappe (1) begrenzt.

8. Vorrichtung gemäß einem der vorgenannte Ansprüche, dadurch gekennzeichnet, daß sie einen manuellen oder elektrischen Schaltmechanismus umfaßt, der auf den Riegel (7) einwirkt, um den einen Schließhaken (9) bildenden Teil zu entriegeln.

## Claims

1. Closing device for the hiding flap (1) of the sealing cap (2) of an automobile vehicle fuel tank filling pipe (3), comprising unlockable locking means for locking the flap (1) in the closed position thereof and formed by a bolt (7), housed in a part of the vehicle body, co-operating with a keeper forming part (9) of the flap (1) located at the opposite of the articulation (5) of the flap (1) on the vehicle body (4), characterized in that it comprises a lever (11) for controlling the keeper forming part (9) pivotally mounted on the back of the flap (1) and able to tilt, upon closing the flap (1), by coming into contact with the sealing cap (2) in order to bring the keeper forming part (9) in a locking position with the bolt (7) to which the flap (1) is maintained closed.

2. Device according to claim 1, characterized in that the control lever (11) is tilted by pushing by the sealing cap (2) in a locking position of the keeper forming part (9) against the returning force of a resilient means (13), such as a helicoidal spring, interposed between one end of the lever (11) opposed to its pivot pin (12) and the back of the flap (1), which resilient means (13) returns the control lever (11) to an unlocking position of the keeper forming part (9) when the bolt (7) is unlocked therefrom and maintains the lever (11) in this unlocking position upon closing the flap (1) and in the absence of the sealing cap (2).

3. Device according to claim 1 or 2, characterized in that it comprises a resilient means (6), such as a helicoidal spring, arranged for permitting an opening of the flap (1) upon unlocking the keeper forming part (9) from the bolt (7) and maintaining or returning the flap (1) in the opening position as long as the keeper forming part (9) is unlocked from the bolt (7).

4. Device according to one of the preceding claims, characterized in that the sealing cap (2) comprises a protuberance (2a), preferably of a flexible material, enabling to push the control lever (11), upon closing the flap (1), to a position in which the lever (11) is lying against the back of the flap (1).

5. Device according to one of the preceding claims, characterized in that the keeper forming part (9) and the control lever (11) are made of a single piece and the keeper forming part (9) comprises a rigid rod (9a) extending from the end of the lever (11) that is opposed to the returning means (13) of the lever (11) perpendicularly thereto and terminating by a hooking element (9b) shaped as a hook engaging an opening (7a) of the keeper (7) so to be hooked thereto when the control lever (11) is in the closing position of the flap (1) in the presence of the cap (2) and being disengaged from the keeper (7) when the lever (11) is maintained by the corresponding resilient means (13) in the tilted position for opening the flap (1).

6. Device according to claim 5, characterized in that the pivot pin (12) of the control lever (11) is located at the connection of the rod (9a) of the keeper forming part (9) with the corresponding end of the lever (11).

7. Device according to one of the preceding claims, characterized in that it comprises an abutment (14) integral with the back of the flap (1) and restricting tilting of the control lever (11) to the position for opening the flap (1).

8. Device according to one of the preceding claims, characterized in that it comprises a control mechanism, manual or electric, acting on the bolt (7) for unlocking the keeper forming part (9).
